# EUROPÄISCHE PATENTANMELDUNG

(11) **EP 1 419 865 A1**
(43) Veröffentlichungstag der Anmeldung: **19.05.2004**
(21) Anmeldenummer: 03025853.7
(22) Anmeldetag: 11.11.2003
(51) Int. Cl.: B29C 43/00, B29C 43/14, B29C 43/42, D04H 1/00

(54) **Formteil, insbesondere Kfz-Innenverkleidungsteil und Verfahren zu seiner Herstellung**

(30) Priorität: 13.11.2002 DE 10252737
(71) Anmelder: Seeber AG & Co. KG, 68165 Mannheim (DE)
(72) Erfinder: Roth, Adalbert, 76596 Forbach 3 (DE)
(74) Vertreter: Lasch, Hartmut Dipl.-Ing.

(57) **Zusammenfassung**

Bei der Herstellung eines räumlich konturierten Formteils, insbesondere eines Kfz-Innenverkleidungsteils, wird eine mit Bindemitteln versehene Matte aus Faserstoffen gepresst. Dabei wird zunächst zumindest ein 1. Bereich der Matte in einem 1. Werkzeug zumindest annähernd zur Enddichte umgeformt und gepresst und anschließend zumindest ein an den 1. Bereich angrenzender 2. Bereich der Matte in einem 2. Werkzeug zumindest annähernd zur Enddichte umgeformt und gepresst. Ein entsprechendes Formteil zeichnet sich dadurch aus, dass eine Grenzlinie in einem Übergangsbereich zwischen dem 1. Bereich und dem 2. Bereich zumindest abschnittsweise nicht-linear verläuft, wobei die beiden Bereiche vorzugsweise miteinander verzahnt sind.

## Beschreibung

Die Erfindung betrifft ein Verfahren zur Herstellung eines räumlich konturierten Formteils, insbesondere eines Kfz-Innenverkleidüngsteils, durch Pressen einer mit Bindemittel versehenen Matte aus Faserstoffen. Darüber hinaus betrifft die Erfindung ein entsprechendes Formteil, wie es nach dem Verfahren hergestellt sein kann.

Formteile der genannten Art sowie entsprechende Verfahren zu ihrer Herstellung sind in verschiedenen Ausgestaltungen bekannt. Üblicherweise wird eine aus Faserstoffen bestehende Matte, die mit wärmeaktivierbaren Bindemitteln und gegebenenfalls weiteren Additiven versetzt ist, in einem Presswerkzeug unter gleichzeitiger Wärmeeinwirkung verdichtet und umgeformt. Nach dem Aushärten des Bindemittels ist ein formstabiles Formteil gebildet, das in einem weiteren Bearbeitungsschritt an seiner Oberfläche mit einem Überzug beispielsweise durch Lackieren oder Aufkaschieren eines Belages, z.B. einer Folie, versehen werden kann. Ein entsprechendes Formteil kann beispielsweise im Kraftfahrzeugbau als Verkleidungsteil im Fahrzeuginnenraum, z.B. als Türinnenverkleidung, Verwendung finden.

Für ein Kfz-Innenverkleidungsteil sind in vielen Fällen räumlich verwinkelte Formgebungen mit mehreren Hinterschneidungen gewünscht, die ein kompliziertes Presswerkzeug erfordern. Insbesondere zur Ausbildung der Hinterschneidungen sind in dem Werkzeug verfahrbare Schieber vorgesehen, die vor der Entnahme des Formteils aus dem Werkzeug zurückgefahren werden müssen. Neben dem komplizierten und aufwendigen Aufbau des Presswerkzeuges ist der weitere Nachteil gegeben, dass die Schieber einem hohen Verschleiß unterliegen, da sie ebenfalls eine dynamische Verdichtungsarbeit bei dem Pressvorgang der Matte aus Faserstoffen leisten müssen. Aufgrund des Verschleißes verändert sich die Werkzeuggeometrie, was zur Folge hat, dass sich im Randbereich der Schieber auf der Oberfläche des Formteils Fehlstellen in Form eines Versatzes oder eines Grates bilden. Diese Fehlstellen müssen entfernt werden, was in der Regel manuell am ausgehärteten Formteil geschieht, wodurch die Herstellung des Formteils wesentlich verteuert ist. Darüber hinaus lassen sich die Fehlstellen bei einigen Formteilen durch Nachbearbeitung nicht entfernen, so dass diese Formteile unbrauchbar sind und weggeworfen werden müssen.

Mit den Schiebern des bekannten Werkzeuges muss nicht nur die Presskraft auf die zugeordneten Bereiche der Matte ausgeübt werden, sondern es ist des Weiteren notwendig, die Schieber zu beheizen, um das Bindemittel der Matte in diesen Bereichen zu aktivieren. Es hat sich gezeigt, dass dabei Temperaturdifferenzen zwischen den beheizten Schiebern und dem übrigen Werkzeug- bzw. Formblock auftreten, was insbesondere im Randbereich des Schiebers zu einer Beeinträchtigung der Qualität des Formteils führen kann.

Aus der DE 38 14 997 A1 ist es bekannt, eine Matte aus Faserstoffen in zwei Stufen zu formen. In einem ersten Pressvorgang wird die Matte unter Einbringung von Wärmeenergie vorgeformt, indem sie annähernd vollflächig um ein geringes Maß, jedoch noch nicht auf ihre Enddichte verdichtet wird, wobei sie eine Kontur ähnlich der gewünschten Endkontur erhält. Infolge der Wärme werden thermoplastische Anteile des Bindemittels zum Schmelzen gebracht, die der vorgeformten Matte nach dem Erkalten eine gewisse Eigenstabilität verleihen. Wenn bei der Vorformung der Matte Hinterschneidungen ausgebildet werden sollen, bedarf es dazu dem Einsatz von Schiebern, womit die genannten Nachteile verbunden sind.

Die vorgeformte Matte ist so stabil, dass sie transportiert werden kann. Um die endgültige Kontur des Formteils zu erhalten, wird die vorgeformte Matte einem weiteren Pressvorgang unterworfen, bei dem höhere Temperaturen als beim Vorformen herrschen, so dass auch die duroplastischen Anteile des Bindemittels aktiviert werden. In dem weiteren Pressvorgang wird die Matte auf die gewünschte Enddichte verdichtet, so dass nach dem Abkühlen ein eigenstabiles und starres Formteil gebildet ist. Auch bei dem weiteren Pressvorgang sind zur Ausbildung von Hinterschneidungen ebenfalls Schieber notwendig.

Der Erfindung liegt die Aufgabe zugrunde, ein Verfahren zur Herstellung eines Formteils genannten Aufbaus zu schaffen, mit dem die Ausbildung von Hinterschneidungen auch ohne Schieber möglich ist. Darüber hinaus soll ein Formteil, insbesondere ein Kraftfahrzeug-Innenverkleidungsteil geschaffen werden, das eine hohe Stabilität besitzt.

Hinsichtlich des Verfahrens wird die Aufgabe erfindungsgemäß durch die Merkmale des Anspruchs 1 gelöst. Dabei ist vorgesehen, dass zunächst zumindest ein 1. Bereich der Matte in einem 1. Werkzeug zumindest annähernd zur Enddichte umgeformt und gepresst wird und dass anschließend zumindest ein an den 1. Bereich angrenzender 2. Bereich der Matte in einem 2. Werkzeug zumindest annähernd zur Enddichte umgeformt und gepresst wird.

Die Erfindung geht von der Grundüberlegung aus, die Matte nicht in ihrer Gesamtheit zu verpressen und umzuformen, sondern in nacheinander ausgeführten Pressvorgängen immer nur aneinander angrenzende Teilbereiche der Matte umzuformen. Die Teilbereiche können dabei so gewählt werden, dass die Umformung der Matte in dem jeweiligen Bereich in einem einfach aufgebauten Werkzeug ohne Schieber erfolgen kann, so dass die mit der Verwendung von Schiebern verbundenen Nachteile vermieden sind. Dabei lassen sich auch Hinterschneidungen des Formteils ausbilden, indem in den einzelnen Pressvorgängen die Ausrichtung bzw. Winkellage der Matte zu der Schließbewegung des jeweiligen Werkzeugs unterschiedlich ist. In dem 1. Werkzeug wird zunächst zumindest ein 1. Teilbereich der Matte bis zur Enddichte oder zumindest nahe dieser verdichtet. Wenn mehrere 1. Bereiche der Matte in dem 1. Werkzeug verdichtet werden, sind diese voneinander beabstandet und über einen noch nicht verdichteten Bereich der Matte miteinander verbunden. Anschließend wird die aus verdichteten und unverdichteten Bereichen bestehende Matte aus dem 1. Werkzeug entnommen und in das 2. Werkzeug eingesetzt. Dabei wird die Matte so ausgerichtet bzw. gekippt oder abgewinkelt, so dass auch der 2. Bereich bzw. die 2. Bereiche in dem 2. Werkzeug bis auf ihre Enddicke verdichtet und dann in einfacher Weise aus dem 2. Werkzeug entnommen werden können. Der 1. Bereich bzw. die 1. Bereiche und der 2. Bereich bzw. die 2. Bereiche bilden zusammen das fertige Formteil, wobei aufgrund der unterschiedlichen Ausrichtung der Matte in den Werkzeugen Hinterschneidungen am fertigen Formteil vorgesehen sein können, ohne dass es zu deren Ausbildung der Anordnung von Schiebern bedarf.

Zwischen dem 1. Bereich und dem 2. Bereich ist ein Übergangsbereich gebildet, der bei der Herstellung des Formteils einer besonderen Aufmerksamkeit bedarf, um einen glatten, stufenlosen Übergang zwischen den Bereichen zu gewährleisten und um eine Schwächung oder eine Sollbruchstelle des Formteils zu vermeiden. Dabei kann vorgesehen sein, dass eine Grenzlinie in dem Übergangsbereich zwischen dem 1. Bereich und dem 2. Bereich zumindest über einen großen Teil ihrer Länge linear oder gerade verläuft. In bevorzugter Ausgestaltung der Erfindung ist jedoch vorgesehen, dass die Grenzlinie nicht-linear verläuft, wobei die beiden Bereiche in dem Übergangsbereich vorzugsweise miteinander verzahnt sind. Die Verzahnung bzw. das Ineinandergreifen zwischen dem 1. Bereich und dem 2. Bereich in ihrem Übergangsbereich vermeidet eine deutlich ausgeprägte gerade Grenzlinie, die ansonsten eine potentielle Sollbruchstelle darstellen könnte.

Für den Verlauf der Grenzlinie zwischen dem 1. Bereich und dem 2. Bereich sind verschiedene Formen denkbar, wobei erfindungsgemäß insbesondere ein sinus- oder wellenförmiger Verlauf oder auch ein polygon- oder zick-zack-förmiger Verlauf bevorzugt sind. Es ist jedoch auch möglich, der Grenzlinie einen unregelmäßigen, nicht-linearen Verlauf zu geben.

Zur besseren Stabilisierung und Kalibrierung des Übergangsbereiches kann in diesem vor dem Pressvorgang in dem 2. Werkzeug auf der Ober- und/oder der Unterseite der Matte bzw. des Formteils eine aussteifende Auflage beispielsweise in Form eines mit Bindemittel getränkten Vlieses angeordnet werden, das nach dem Pressen in dem 2. Werkzeug einstückiger Bestandteil des Formteils ist.

Üblicherweise ist angestrebt, dass das Formteil über seine gesamte Fläche eine annähernd konstante Dicke besitzt. Alternativ ist es jedoch auch möglich, insbesondere in dem Übergangsbereich zwischen dem 1. Bereich und dem 2. Bereich eine größere oder kleinere Stärke als in anderen Bereichen des Formteils zu erreichen. Eine geringere Stärke im Übergangsbereich kann dadurch erreicht werden, dass der Übergangsbereich beim Pressen in dem 2. Werkzeug überverdichtet wird. Entsprechend lässt sich eine größere Dicke im Übergangsbereich erzielen, indem dieser Bereich beim Pressvorgang im 2. Werkzeug geringer verdichtet wird, d.h. einer Unterverdichtung unterliegt.

Zusätzlich oder alternativ zu der genannten Ausgestaltung des Übergangsbereichs kann vorgesehen sein, dass zumindest in dem Übergangsbereich beim Pressen Einprägungen ausgebildet werden. Diese Einprägungen können sowohl im 1. Werkzeug als auch im 2. Werkzeug, bevorzugt in beiden Werkzeugen, zumindest im Übergangsbereich eingebracht werden. Die Einprägungen sind kleinflächig bzw. punktuell ausgebildet und besitzen vorzugsweise eine pyramiden- oder kugelförmige Konfiguration. Alternativ wird vorgeschlagen als Einprägung eine Oberflächenstruktur zu wählen, die der Dekorstruktur der später auf das fertige Trägerteil aufgebrachten Folie, z.B. Lederimitat, ähnlich oder gleich ist.

In bevorzugter Ausgestaltung sind mehrere derartige Einprägungen in einer geraden oder gekrümmten Reihe nebeneinander angeordnet, die sich vom 1. Bereich zum 2. Bereich erstreckt. Die Einprägungen können unterschiedliche Größen besitzen, wobei vorzugsweise vorgesehen ist, dass die Größe der Einprägungen einer Reihe von dem 1. Bereich zu dem 2. Bereich zunimmt, so dass eine keilförmige, zu dem 1. Bereich weisende Ausgestaltung gegeben ist.

Dabei kann vorgesehen sein, dass eine Vielzahl entsprechender Reihen von Einprägungen mit Abstand nebeneinander angeordnet sind und insbesondere parallel zueinander verlaufen.

Neben der geometrischen Ausgestaltung des Übergangsbereichs haben auch die Art des verwendeten Bindemittels und/oder die Temperaturführung während der einzelnen Pressstufen eine Auswirkung auf die Qualität des Übergangsbereichs. Vorzugsweise findet ein Bindemittel Verwendung, das während und/oder nach der Wärmeeinwirkung aushärtet, d.h. entweder duroplastische oder thermoplastische Eigenschaften oder eine Kombination von diesen zeigt.

Hinsichtlich des Formteils wird die oben genannte Erfindung dadurch gelöst, dass das Formteil einen 1. gepressten Bereich und einen daran angrenzenden 2. gepressten Bereich aufweist, wobei eine Grenzlinie in einem Übergangsbereich zwischen dem 1. Bereich und dem 2. Bereich zumindest abschnittsweise nicht-linear verläuft. Aufgrund des nicht-linearen Verlaufs der Grenzlinie ist die Bildung einer potentiellen Sollbruchstelle vermieden. Hinsichtlich weiterer Merkmale des Formteils wird auf die vorstehende Beschreibung des Verfahrens verwiesen.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1: ein 1. Werkzeug gemäß einer 1. Ausführungsform des erfindungsgemäßen Verfahrens,
- Figur 2: ein 2. Werkzeug gemäß der 1. Ausführungsform des erfindungsgemäßen Verfahrens,
- Figur 3: ein 1. Werkzeug gemäß einer 2. Ausführungsform des erfindungsgemäßen Verfahrens,
- Figur 4: ein 2. Werkzeug gemäß der 2. Ausführungsform des erfindungsgemäßen Verfahrens,
- Figur 5: eine Aufsicht auf einen Übergangsbereich gemäß einer ersten Ausgestaltung nach dem Pressen in dem 1. Werkzeug,
- Figur 6: den Schnitt VI-VI in Fig. 5,
- Figur 7: eine alternative Ausgestaltung des Übergangsbereichs nach dem Pressen in dem 1. Werkzeug,
- Figur 8: eine weitere Alternative der Ausgestaltung des Übergangsbereichs nach dem Pressen in dem 1. Werkzeug,
- Figur 9: eine Aufsicht auf den Übergangsbereich mit eingebrachten Einprägungen nach dem Pressen in dem 1. Werkzeug,
- Figur 10: den Schnitt X-X in Fig. 9,
- Figur 11: eine Fig. 9 entsprechende Aufsicht mit Einprägungen in einer alternativen Ausgestaltung und
- Figur 12: den Schnitt XII-XII in Fig. 11.

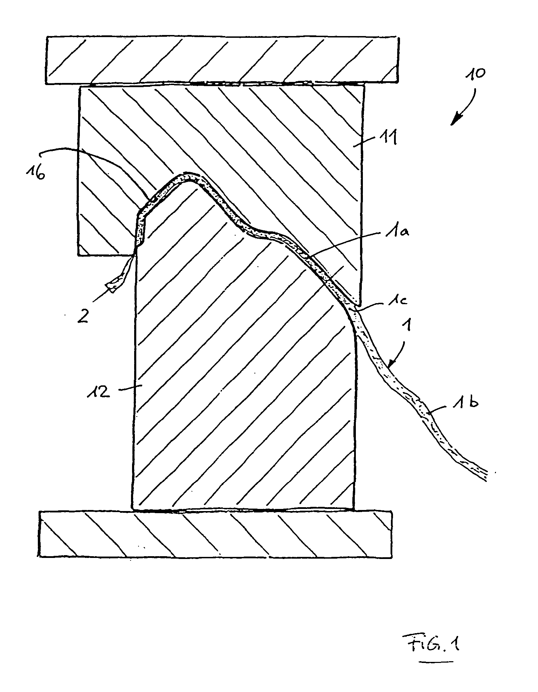

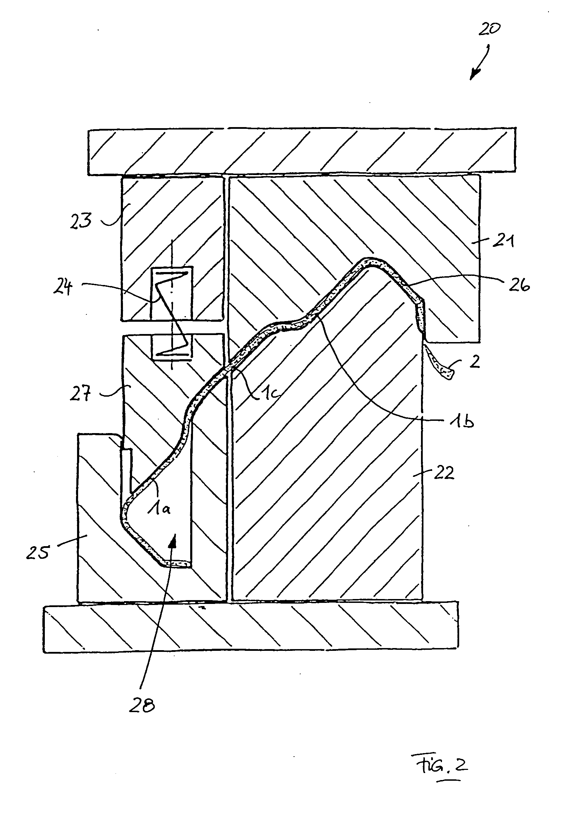

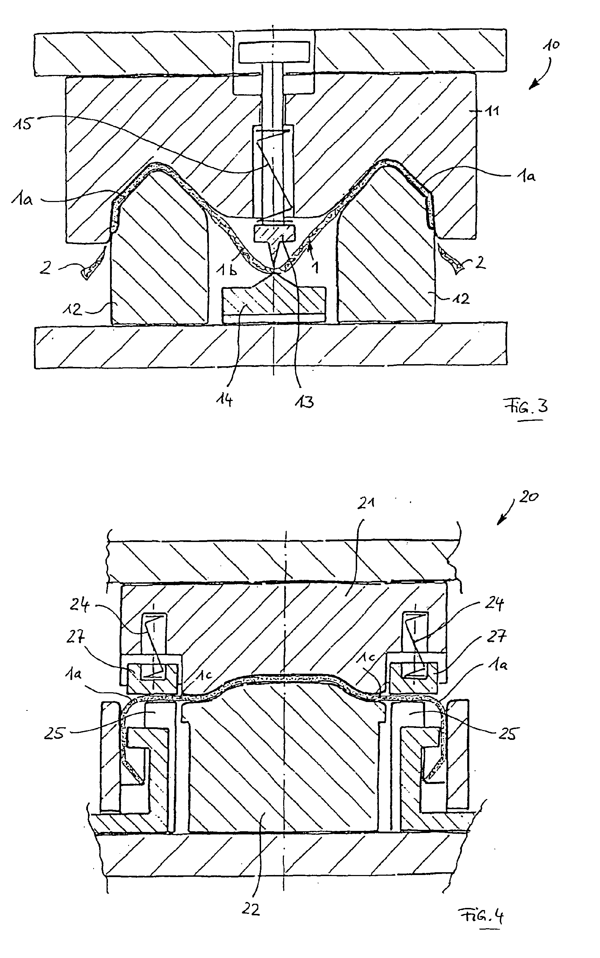

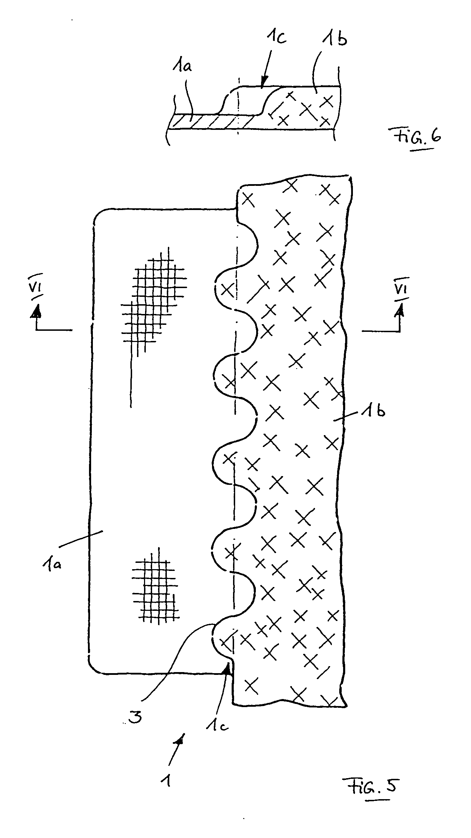

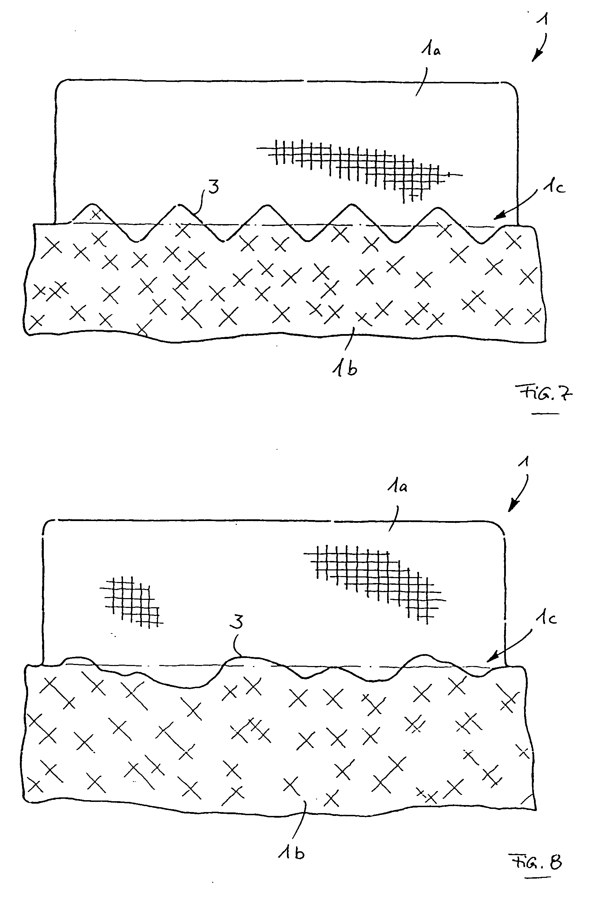

Die Fig. 1 und 2 veranschaulichen eine 1. Ausführungsform des erfindungsgemäßen Verfahrens. Fig. 1 zeigt ein 1. Werkzeug 10, das ein oberes Werkzeugteil 11 und ein unteres Werkzeugteil 12 umfasst, die in bekannter Weise vertikal auf- und zufahrbar sind und zwischen sich einen Formhohlraum 16 bilden.

Eine Matte 1 besteht aus Faserstoffen, die mit Bindemitteln versetzt sind, die durch Wärme, die über das 1. Werkzeug 10 zugeführt wird, aktiviert werden und bei der Wärmeeinwirkung und/oder beim Erkalten aushärten.

In dem Formhohlraum 16 wird nur ein 1. Bereich 1a der Matte 1 zusammengepresst und auf Enddichte verdichtet. Ein seitlicher, überflüssiger Überstand 2 wird entsorgt. Wie Fig. 1 zeigt, ist die Matte 1 in einer derartigen schrägen räumlichen Ausrichtung in dem 1. Werkzeug 10 gehalten, so dass der 1. Bereich 1a der Matte 1 nach dem Pressvorgang und dem Öffnen des 1. Werkzeugs nach oben von dem unteren Werkzeugteil 12 abgehoben werden kann. Wenn man nur den 1. Bereich 1a der Matte 1 betrachtet, besitzt dieser keine Hinterschneidungen.

Nach dem Ausformen des 1. Bereichs 1a wird die Matte 1 mit einem angrenzenden noch nicht ausgeformten und gepressten 2. Bereich 1b in ein 2. Werkzeug eingesetzt, wie es in Fig. 2 dargestellt ist. Das 2. Werkzeug 20 besitzt ein unteres Werkzeugteil 22 und ein oberes Werkzeugteil 21, die relativ zueinander vertikal auf- und zufahrbar sind und zwischen sich einen Formhohlraum 26 bilden. In dem 2. Werkzeug 20 wird der 2. Bereich 1b der Matte 1 in bekannter Weise unter Aktivierung des Bindemittels umgeformt und auf Enddichte gepresst. Während des Umformvorganges des 2. Bereichs 1b ist der im vorhergehenden Verfahrensschritt geformte 1. Bereich lagefixiert. Dies wird durch ein unteres Aufnahmeteil 25 erreicht, in dem eine Ausnehmung 28 ausgebildet ist, an deren Wandung sich der 1. Bereich 1a zumindest abschnittsweise vollflächig anlegt. Am oberen Werkzeugteil 21 ist ein Spannblock 27 verschieblich gelagert, der über eine Feder 24 beaufschlagt ist, die sich an einem Gegenlager 23 des oberen Werkzeugteils 21 abstützt und den Spannblock 27 so gegen den bereits ausgeformten 1. Bereich 1a der Matte 1 spannt, dass dieser zwischen dem Spannblock 27 und dem Aufnahmeteil 25 fest gehalten ist.

Da der 1. Bereich 1a und der 2. Bereich 1b direkt aneinandergrenzen, ist zwischen ihnen ein Übergangsbereich 1c gegeben, in dem eine Grenzlinie 3 zwischen dem 1. Bereich 1a und dem 2. Bereich 1b verläuft, wie es in den Fig. 5 und 6 dargestellt ist. Diese Figuren zeigen die Matte 1 nach dem Pressen des 1. Bereichs 1a und vor dem Pressen des 2. Bereichs 1b. Wie Fig. 6 zeigt, ist der 1. Bereich 1a bereits auf Enddichte verpresst, während der 2. Bereich 1b noch von der unverpressten Matte gebildet ist. Der 1. Bereich 1a und der 2. Bereich 1b sind miteinander verzahnt, indem die Grenzlinie 3 zwischen diesen Bereichen sinus- bzw. wellenförmig verläuft.

In alternativer Ausgestaltung der Grenzlinie ist gemäß Fig. 7 vorgesehen, dass die Grenzlinie 3 polygon- bzw. zick-zack-förmig verläuft, während Fig. 8 einen vollständig unregelmäßigen Verlauf der Grenzlinie 3 mit unregelmäßigen Hügeln und Tälern aufweist.

Fig. 2 zeigt, dass die Matte 1 während des Pressvorganges des 2. Bereichs 1b in einer grundsätzlich anderen räumlichen Orientierung im 2. Werkzeug 20 als beim Pressvorgang für den 1. Bereich 1a angeordnet ist. Nach Öffnen des 2. Werkzeugs kann der 2. Bereich 1b in einfacher Weise von dem unteren Werkzeugteil 22 abgenommen werden. Für sich alleine betrachtet, weist auch der 2. Bereich 1b keine Hinterschneidungen auf. Wenn man jedoch das gesamte Formteil betrachtet, können an diesem aufgrund der unterschiedlichen räumlichen Orientierung während des Pressvorgangs für den 1. Bereich 1a und während des Pressvorgang für den 2. Bereich 1b Hinterschneidungen ausgebildet werden, was im dargestellten Beispiel bei einem U-förmigen Formteil mit an ihren freien Enden nach innen eingezogenen U-Schenkeln verwirklicht ist.

Das Bindemittel, das den Faserstoffen der Matte zugesetzt ist, sollte über einen relativ großen Zeitraum aushärten, so dass der 1. Bereich nach seinem Pressvorgang zwar eine ausreichende Eigenstabilität besitzt, jedoch noch nicht vollständig ausgehärtet ist, so dass der 1. Bereich insbesondere im Übergangsbereich zu dem 2. Bereich in dem 2. Werkzeug einer Nachverdichtung unterworfen werden kann.

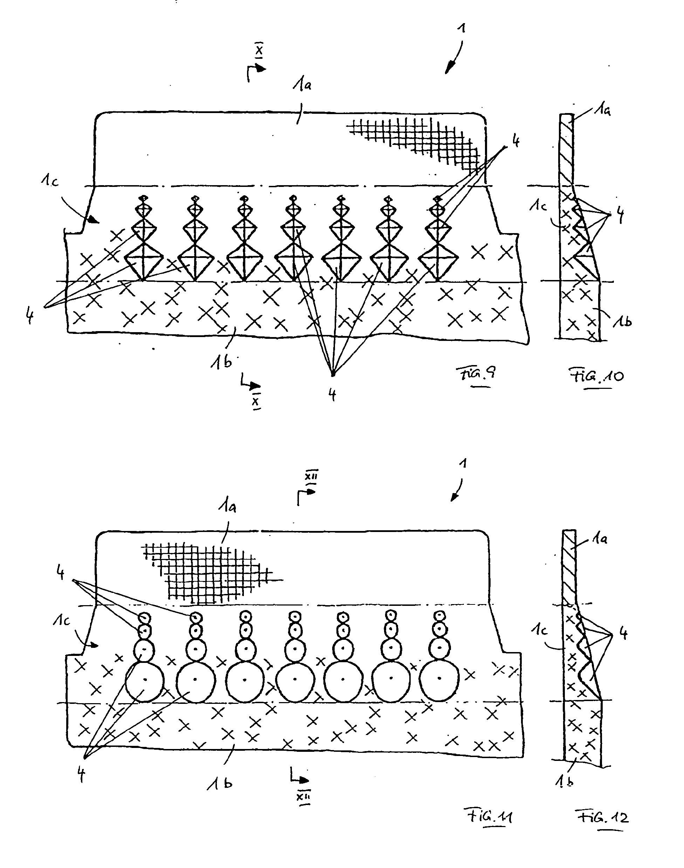

Während bei dem Verfahren gemäß den Fig. 1 und 2 für das Formteil nur ein einziger 1. Bereich 1a und ein einziger 2. Bereich 1b vorgesehen ist, zeigen die Fig. 3 und 4 eine Ausgestaltung, bei dem zwei 1. Bereiche 1a in dem 1. Werkzeug 10 umgeformt und verdichtet werden. Die beiden 1. Bereiche 1a umfassen jeweils die Schenkel und einen kurzen Abschnitt der Basis des U-förmigen Formteils, während der dazwischenliegende Abschnitt der Basis von dem 2. Bereich 1b gebildet ist. Die Matte 1 ist in dem 1. Werkzeug durch eine Klemmeinheit fixiert, die ein oberes, von einer Feder 15 beaufschlagtes Klemmteil 13 umfasst, das die Matte 1 von oben gegen ein unteres Widerlager 14 spannt. Die beiden 1. Bereiche 1a sind innerhalb des 1. Werkzeugs 10 so ausgerichtet, dass sie für sich betrachtet keine Hinterschneidungen aufweisen und nach Öffnen des 1. Werkzeugs ohne Probleme von dem unteren Werkzeugteil 12 abgenommen werden können.

Nachdem die Matte 1 im 1. Werkzeug 10 in ihren 1. Bereichen 1a gepresst und verdichtet ist, wird sie in das in Fig. 4 gezeigte 2. Werkzeug umgesetzt, in dem der zwischen den beiden 1. Bereichen 1a liegende 2. Bereich geformt und gepresst wird. Während des Pressvorganges sind die beiden seitlichen, bereits umgeformten 1. Bereiche 1a jeweils in dem 2. Werkzeug 20 fixiert, wie es bereits anhand der Fig. 2 beschrieben wurde.

Für sich allein betrachtet weist der 2. Bereich 1b ebenfalls keine Hinterschneidungen auf und kann deshalb ohne Probleme aus dem 2. Werkzeug entnommen werden. Bei Betrachtung des gesamten Formteils lassen sich aufgrund der unterschiedlichen räumlichen Ausrichtung der nacheinander geformten und gepressten Bereiche innerhalb des jeweiligen

Werkzeugs Hinterschneidungen ausbilden, die wiederum von am äußeren freien Ende der U-Schenkel ausgebildeten, nach innen gerichteten Abwinkelungen gebildet sind.

Die Fig. 9 und 10 zeigen eine Aufsicht auf den Übergangsbereich 1c einer Matte 1 nach dem Pressen in dem 1. Werkzeug, d.h. der 1. Bereich 1a ist bereits auf Enddichte verpresst, während der 2. Bereich 1b noch unverpresst ist. Im Übergangsbereich 1c sind eine Vielzahl von kleinflächigen bzw. punktuellen Einprägungen 4 ausgebildet, die eine pyramidenförmige Konfiguration besitzen und in ihrem tiefsten Punkt zumindest annähernd auf die Enddichte verpresst sind. Mehrere Einprägungen 4 sind in einer geraden Reihe nebeneinander angeordnet, die sich von dem 1. Bereich 1a zu dem 2.

Bereich erstreckt, wobei eine Vielzahl entsprechender Reihen mit Abstand nebeneinander und parallel zueinander verlaufen. Die Einprägungen 4 einer Reihe besitzen unterschiedliche Größe, wobei die Größe der Einprägungen 4 von dem 1. Bereich 1a zu dem 2. Bereich 1b zunimmt, so dass eine keilförmige, zu dem 1. Bereich 1a weisende Ausgestaltung gegeben ist.

Die Fig. 11 und 12 zeigen eine Abwandlung der Ausgestaltung gemäß den Fig. 9 und 10, die sich dadurch unterscheidet, dass die Einprägungen 4 nunmehr statt einer pyramidenförmigen Konfiguration eine kegelförmige Konfiguration aufweisen, wobei auch hier vorgesehen ist, dass die Größe der Einprägungen 4 einer Reihe von dem 1. Bereich 1a zu dem 2. Bereich 1b zunimmt.

Es sind auch andere Gestaltungen der Einprägungen denkbar und die gezeigte pyramiden- oder kegelförmige Konfiguration kann von symmetrisch oder asymmetrisch ausgestalteten Pyramiden- oder Kegelformen gebildet sein.

## Patentansprüche

1. Verfahren zur Herstellung eines räumlich konturierten Formteils, insbesondere eines Kfz-Innenverkleidungsteils, durch Pressen einer mit Bindemittel versehenen Matte (1) aus Faserstoffen, wobei zunächst zumindest ein 1. Bereich (1a) der Matte (1) in einem 1. Werkzeug (10) zumindest annähernd zur Enddichte umgeformt und gepresst wird und anschließend zumindest ein an den 1. Bereich (1a) angrenzender 2. Bereich (1b) der Matte (1) in einem 2. Werkzeug (20) zumindest annähernd zur Enddichte umgeformt und gepresst wird.

2. Verfahren nach Anspruch 1, **dadurch gekennzeichnet, dass** eine Grenzlinie (3) in einem Übergangsbereich (1c) zwischen dem 1. Bereich (1a) und dem 2. Bereich (1b) nicht-linear verläuft.

3. Verfahren nach Anspruch 2, **dadurch gekennzeichnet, dass** der 1. Bereich (1a) und der 2. Bereich (1b) in dem Übergangsbereich (1c) miteinander verzahnt sind.

4. Verfahren nach Anspruch 2 oder 3, **dadurch gekennzeichnet, dass** die Grenzlinie (3) sinusförmig verläuft.

5. Verfahren nach Anspruch 2 oder 3, **dadurch gekennzeichnet, dass** die Grenzlinie (3) zick-zack-förmig verläuft.

6. Verfahren nach Anspruch 2 oder 3, **dadurch gekennzeichnet, dass** die Grenzlinie einen unregelmäßigen Verlauf besitzt.

7. Verfahren nach einem der Ansprüche 1 bis 6, **dadurch gekennzeichnet, dass** vor dem Pressen des 2. Bereichs (1b) auf zumindest eine Seite der Matte (1) im Übergangsbereich (1c) eine verstärkende Auflage angeordnet wird.

8. Verfahren nach Anspruch 7, **dadurch gekennzeichnet, dass** die Auflage ein mit Bindemittel getränktes Vlies ist.

9. Verfahren nach einem der Ansprüche 1 bis 8, **dadurch gekennzeichnet, dass** diejenigen Abschnitte des Übergangsbereichs (1c), die im 1. Werkzeug (10) gepresst werden, im 2. Werkzeug (20) nachverdichtet werden.

10. Verfahren nach einem der Ansprüche 1 bis 9, **dadurch gekennzeichnet, dass** in dem Übergangsbereich (1c) beim Pressen in dem 1. Werkzeug (10) kleinflächige bzw. punktuelle Einprägungen (4) ausgebildet werden.

11. Verfahren nach Anspruch 10, **dadurch gekennzeichnet, dass** die Einprägungen (4) pyramiden- oder kegelförmige Konfigurationen besitzen.

12. Verfahren nach Anspruch 10 oder 11, **dadurch gekennzeichnet, dass** die Einprägungen (4) zumindest annähernd auf die Enddichte verpresst sind.

13. Verfahren nach einem der Ansprüche 10 bis 12, **dadurch gekennzeichnet, dass** mehrere Einprägungen (4) in einer Reihe nebeneinander angeordnet sind, die sich vom 1. Bereich (1a) zum 2. Bereich (1b) erstreckt.

14. Verfahren nach Anspruch 13, **dadurch gekennzeichnet, dass** die Einprägungen (4) der Reihe eine unterschiedliche Größe besitzen.

15. Verfahren nach Anspruch 14, **dadurch gekennzeichnet, dass** die Größe der Einprägungen (4) von dem 1. Bereich (1a) zu dem 2. Bereich (1b) zunimmt.

16. Verfahren nach einem der Ansprüche 13 bis 15, **dadurch gekennzeichnet, dass** mehrere Reihen von Einprägungen (4) mit Abstand nebeneinander angeordnet sind.

17. Verfahren nach einem der Ansprüche 1 bis 16, **dadurch gekennzeichnet, dass** das Bindemittel während und/oder nach der Wärmeeinwirkung aushärtet.

18. Formteil, insbesondere Kfz-Innenverkleidungsteil, das aus einer mit Bindemittel versehenen, gepressten Matte aus Faserstoffen insbesondere nach dem Verfahren gemäß einem der Ansprüche 1 bis 17 gebildet ist, mit einem 1. gepressten Bereich (1a) und einem daran angrenzenden 2. gepressten Bereich (1b), wobei eine Grenzlinie (3) in einem Übergangsbereich (1c) zwischen dem 1. Bereich (1a) und dem 2. Bereich (1b) zumindest abschnittsweise nicht-linear verläuft.

19. Formteil nach Anspruch 18, **dadurch gekennzeichnet, dass** der 1. Bereich (1a) und der 2. Bereich (1b) in dem Übergangsbereich (1c) miteinander verzahnt sind.

20. Formteil nach Anspruch 18 oder 19, **dadurch gekennzeichnet, dass** die Grenzlinie (3) sinusförmig verläuft.

21. Formteil nach Anspruch 18 oder 19, **dadurch gekennzeichnet, dass** die Grenzlinie (3) zick-zack-förmig verläuft.

22. Formteil nach Anspruch 18 oder 19, **dadurch gekennzeichnet, dass** die Grenzlinie einen unregelmäßigen Verlauf besitzt.

23. Formteil nach einem der Ansprüche 18 bis 22, **dadurch gekennzeichnet, dass** im Übergangsbereich (1c) zumindest einseitig eine verstärkende Auflage angeordnet ist.

24. Formteil nach Anspruch 23, **dadurch gekennzeichnet, dass** die Auflage ein mit Bindemittel getränktes Vlies ist.
